# EUROPEAN PATENT SPECIFICATION

(11) **EP 2 619 942 B1**
(45) Date of publication and mention of the grant of the patent: **29.08.2018**
(21) Application number: 11826958.8
(22) Date of filing: 31.01.2011
(51) Int. Cl.: H04L 12/18, H04L 12/16, H04L 12/58

(54) **SYSTEM AND METHOD FOR CONFERENCE MESSAGING BETWEEN UNIVERSAL PLUG AND PLAY ENABLED TELEPHONY DEVICES AND WAN DEVICES**
SYSTEM UND VERFAHREN ZUR KONFERENZNACHRICHTENÜBERMITTLUNG ZWISCHEN UNIVERSELLEN PLUG-AND-PLAY-AKTIVIERTEN TELEFONVORRICHTUNGEN UND WAN-VORRICHTUNGEN
SYSTÈME ET PROCÉDÉ DE MESSAGERIE DE CONFÉRENCE ENTRE DES DISPOSITIFS DE TÉLÉPHONIE COMPATIBLES UPNP ET DES DISPOSITIFS WAN

(30) Priority: 21.09.2010 IN CH27452009
(43) Date of publication of application: 31.07.2013
(73) Proprietor: Samsung Electronics Co., Ltd., Gyeonggi-do 443-742 (KR)
(72) Inventor: PATIL, Mayuresh Madhukar, Bangalore 560093 (IN); MAENG, Je-Young, Suwon-si Gyeonggi-do 443-470 (KR); RAHMAN, Mahfuzur, San Jose, California 95134 (US)
(74) Representative: HGF Limited
(86) International application number: PCT/KR2011/000678
(87) International publication number: WO 2012/039530

(56) References cited:
- WO-A2-2011/074880
- US-A1- 2005 213 580
- US-A1- 2005 233 737
- US-A1- 2010 198 954

## Description

### Technical Field

The present invention relates generally to a field of communication, and more particularly, to conference messaging between Universal Plug and Play (UPnP) enabled telephony devices and Wide Area Network (WAN) devices.

### Background Art

UPnP is a set of computer network protocols promulgated by the UPnP Forum. The goals of UPnP forum are to allow devices to connect seamlessly and to simplify implementation of networksin home data sharing, communications, and entertainment and corporate environments. UPnP achieves this by defining and publishing UPnP device control protocols built upon open, Internet-based communication standards.

The UPnP architecture allows peer-to-peer networking of Personal Computers (PCs), networked appliances, and wirelessdevices. It is a distributed, open architecture, based on established standards (e.g., TCP/IP, UDP, HTTP and XML). The UPnP architecture supports zero-configuration networking. An UPnP compatible device from any vendor can dynamically join a network, obtain an IP address, transmit its name, convey its capabilities upon request, and discover presence and capabilities of other devices.

Similarly, UPnP devices can leave the network automatically without providing any unwanted stateinformation. UPnP protocol provides discovery, control and eventing mechanisms. Discovery is enabled using Simple Service Delivery (SSD) protocol. All the control messages are in the format of Extended Markup Language (XML). Eventing follows the General Event Notification Architecture (GENA) protocol. Using these technologies, UPnP makes availability and unavailability of the UPnP devices on the fly to the other devices in the network.

The UPnP forum also provides telephony services for extending user experience in a home to access telephony services like messaging services, presence services or Call handling (PS/CS call). For example, the UPnP telephony service allows the user to access messaging services like sending a message using an UPnP device which does not have the messaging capability.

As analogous to UPnP Device Architecture (DA), telephony defines three kinds of devices, namely a Telephony Server (TS) that provides messaging, and presence related services to the user, a Telephony Control Point (TCP) to initiate actions provided by the TS and a Telephony Client device (TC) for media related handling and providing input and output of the UPnP device.

Current UPnP telephony messaging service allows the user to send different types of messages (SMS/MMS/Chat IM/Email). The messaging service supports page mode messaging (e.g., SMS, MMS, email, and the like) and session mode messaging (e.g., chatting). The messaging service also allows the user to group a number of messages into a single messaging session whereby the message service defines actions to create the session and group the messages into a single messaging session. The UPnP telephony messaging service also allows a user to modify the existing session.

However, the user of the UPnP device cannot use the messaging service for conference messaging with WAN devices, and joining/rejoining the conference messaging session due to different TCP/TC devices in the UPnP telephony based home network that may not support all media content types, For example, a television set can display plain text but may not support pictures. Further, if pictures need to be retrieved, then content negotiation has to be carried out before a conference messaging session is set up. Also, the WAN devices are unaware of the media capabilities of the TCP/ TC device.

If media capabilities, such as supported Multipurpose Internet Mail Extensions (MIME) types, are not taken into account, then it is possible that the UPnP telephony device or the TCP may receive unsupported media content from the WAN devices, not at all supported by the TCP, in the conference messaging session, resulting in inconsistent user experience with respect to the conference messaging session. Currently the UPnP telephony messaging service fails to capture and provide dynamic session information (e.g., user leaving or joining the session) associated with the conference messaging session as dynamic information is required to push to the user rather than pull from the TCP. WO 2011/074880 A2 and US 2010/198954 A1 both provide certain disclosures in the field of conference messaging.

### Disclosure of Invention Technical Problem

Accordingly, the present invention has been made to solve the above-mentioned problems occurring in the prior art, and the present invention provides a system and method of conference messaging between UPnP telephony devices and WAN devices.

### Solution to Problem

According to one aspect of the present invention, a method according to claim 1 is disclosed.

According to another aspect of the present invention, a Telephony Server according to claim 11 is disclosed.

### Brief Description of Drawings

The above and other aspects, features and advantages of certain exemplary embodiments of the present invention will be more apparent from the following description taken in conjunction with the accompanying drawings, in which:
FIG. 1 is a block diagram of a UPnP telephony based home network system enabling conference messaging between one or more TCPs and WAN devices, according to one embodiment of the present invention;
FIG. 2 is a flow chart illustrating a process of conference messaging between the TCP in the UPnP telephony based home network system and the WAN devices, according to one embodiment of the present invention;
FIG. 3 is a flow chart illustrating a process of adding or removing at least one WAN device by the TCP into/from an ongoing conference messaging session, according to one embodiment of the present invention;
FIG. 4 is a flow chart illustrating a process of transferring an ongoing conference messaging session from the TCP to another TCP, according to one embodiment of the present invention; and
FIG. 5 is a flow chart illustrating a process of joining an ongoing conference messaging session with the WAN devices, according to one embodiment of the present invention.

### Mode for the Invention

The present invention provides a system and method of conference messaging between UPnP enabled telephony devices and WAN devices. Embodiments of the present invention will be described with reference to the accompanying drawings. In the following description, various specific definitions are provided only to help general understanding of the present invention, and it is apparent to those skilled in the art that the present invention can be implemented without such definitions. Further, in the following description of the present invention, a detailed description of known functions and configurations incorporated herein will be omitted to avoid obscuring the subject matter of the present invention. Throughout the drawings, corresponding reference numerals indicate like or corresponding parts and features.

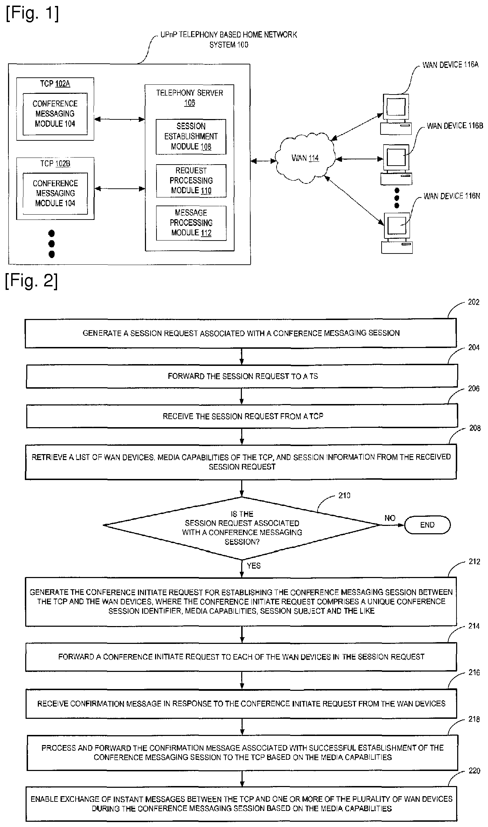

FIG. 1 is a block diagram of an UPnP telephony based home network system 100 enabling conference messaging between one or more telephony control points (TCPs) 102A-N and WAN devices 116A-N, according to one embodiment. In FIG. 1, the UPnP telephony based home network system 100 includes the TCPs 102A-N communicatively connected to a telephony server (TS) 106. The TS 106 is connected to the WAN devices 116A-N via the WAN 114.

Each of the TCPs 102A-N includes a conference messaging module 104 for initiating, modifying, transferring and joining a conference messaging session associated with the WAN devices 116A-N. The conference messaging session is initiated via a session request that includes list of WAN devices, media capabilities (e.g., MIME types), session subject, and session type. The TS 106 includes a request processing module 110 for processing a session request (e.g., initiate session request, modify session request, join session request and transfer session request) received from the one or more TCPs 102A-N. The TS 106 also includes a session establishment module 108 for establishing a conference messaging session between the one or more TCPs 102A-N and the one or more WAN devices 116A-N based on the session request.

The TS 106 further includes a message processing module 112 for enabling conference messaging between one of the TCPs 102A-N and the WAN devices 116A-N based on media capabilities of said one of the TCPs 102A-N. The message processing module 112 may also allow the TCPs 102A-N to subscribe to the dynamic session information associated with an ongoing conference messaging session using General Event Notification Architecture (GENA) protocol.

For example, the dynamic session information may include user leaving the session information, user joining the session information, any changes made to the subject of the conference messaging session and the like. If any of TCPs 102A-N subscribes, the TS 106 provides dynamic session information associated with the ongoing conference messaging session as notifications to the corresponding TCPs 102A-N. A structure of the dynamic session information in an XML format is given in Table 1. Moreover, the operation of the UPnP telephony based home network system 100 is described in greater detail in FIGs. 2-5.

### Table 1

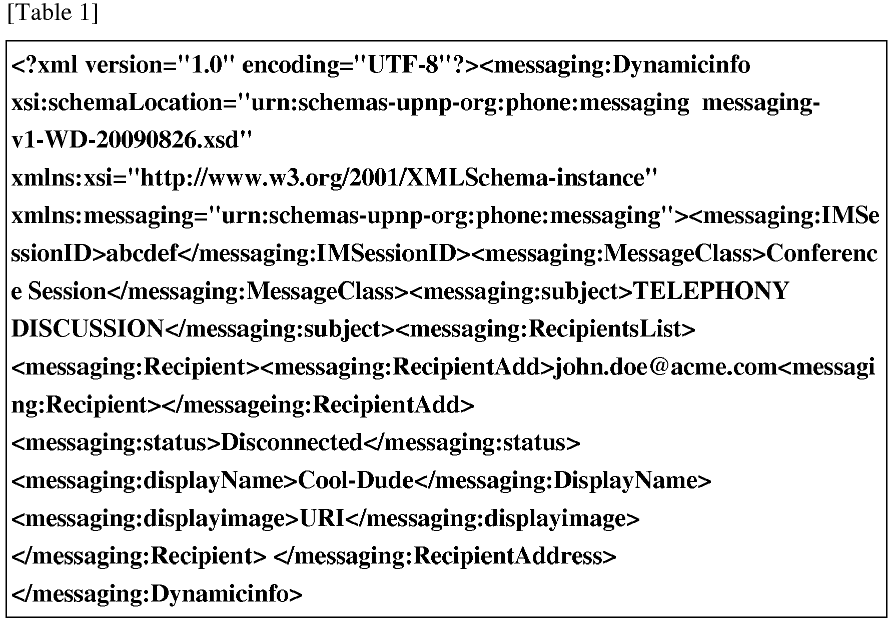

FIG. 2 is a process flow diagram illustrating a method of conference messaging between the TCP 102A in the UPnP telephony based home network system 100 and the WAN devices 116A-N, according to one embodiment. At Step 202, a session request for initiating a conference messaging session is generated. At Step 204, the session request is forwarded to the TS 106 by the TCP 102A. At Step 206, the session request is received by the TS 106 from the TCP 102A. At Step 208, the received session request is processed and a list of WAN devices, media capabilities of the TCP 102A, and session information (e.g., subject) is retrieved from the received session request by the TS 106.

At Step 210, it is determined whether the session request is associated with a conference messaging session based on the session information. On one hand, if the session identifier is "individual", then it is determined that the session request is not associated with the conference messaging session and the process is terminated. On the other hand, if the session identifier embedded in the session request is "Group"then it is determined that the session request is associated with the conference messaging session. In such case, the conference initiate request is generated by the TS 106 for establishing the conference messaging session between the TCP 102A and the WAN devices 116A-N at Step 212. For example, the conference initiate request may include a unique conference session identifier, the media capabilities of the TCP 102A, the session subject and the like.

At Step 214, the conference initiate request is forwarded by the TS 106 to each of the WAN devices 116A-N requested in the session request. At Step 216, a confirmation message is received from each of the WAN devices 116A-N in response to the conference initiate request. At Step 218, the confirmation message associated with successful establishment of the conference messaging session is processed and forwarded by the TS 106 to the TCP 102A based on its media capabilities.

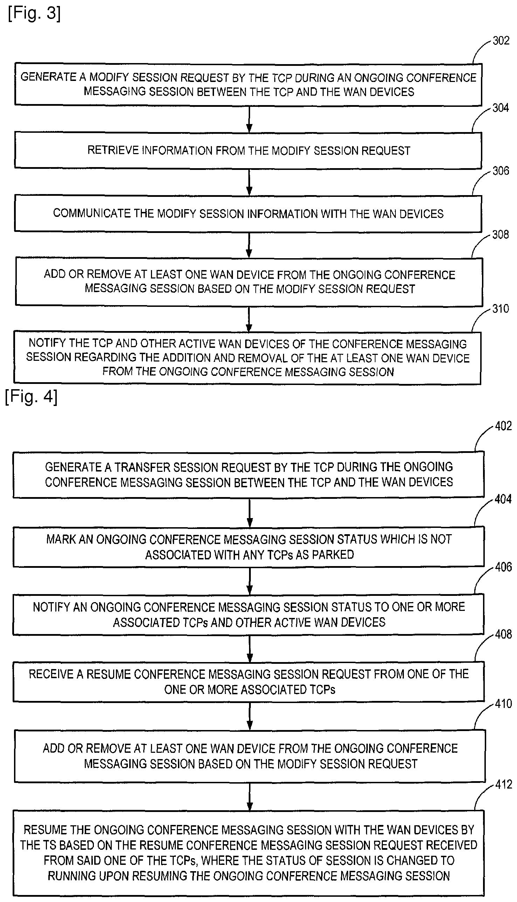

At Step 220, exchange of one or more instant messages is enabled between the TCP 102A and one or more of the WAN devices 116A-N based on the media capabilities during the conference messaging session. For example, the one or more instant messages may be exchanged using OMA SIMPLE IM messaging service. The process illustrated in FIG. 2 may also allow the TCP 102A to modify, update or transfer the ongoing conference messaging session with the WAN devices 116A-N as described in greater detail in FIGs. 3 and 4. Further, the above-described process of FIG. 2 may provide dynamic information during an ongoing conference messaging session.

FIG. 3 is a process flow diagram illustrating a method of adding or removing at least oneWAN device by the TCP 102A into/from an ongoing conference messaging session, according to one embodiment. At Step 302, a modify session request is generated by the TCP 102A during an ongoing conference messaging session between the TCP 102A and the WAN devices 116A-N. The modify session request includes subject information, media capabilities of the TCP 102A, at least one WAN device to be added/removed into/from the conference messaging session.

At Step 304, information is retrieved by the TS 106 from the received modify session request. At Step 306, the modify session information is communicated with the WAN devices 116A-N by the TS 102 over the WAN 114. At Step 308, at least one WAN device is added or removed to/from the ongoing conference messaging session based on the modify session request. At Step 310, the TCP 102A and other active WAN devices of the ongoing conference messaging session are notified regarding the addition and removal of the at least one WAN device from the ongoing conference messaging session. It can be noted that, Steps 304 through 310 are performed by the TS 106. In the same manner, the TCP can update the information (e.g., status, subject, conference schedule information, and the like) during the ongoing conference messaging session.

FIG. 4 is a process flow diagram illustrating a method of transferring an ongoing conference messaging session from the TCP 102A to another TCP 102B, according to one embodiment. At Step 402, a transfer session request is generated by the TCP102A during the ongoing conference messaging session between the TCP 102A and the WAN devices 116A-N. The transfer session request is meant for leaving the ongoing session without termination. At Step 404, session identifier information is retrieved from the transfer session request received from the TCP 102A by the TS 106. At Step 406, an ongoing conference messaging session status which is not associated with any TCPs is marked as parked. The term "session parking" refers to temporarily storing the information associated with the ongoing conference messaging session into the TS 106.

In Step 408, the ongoing conference messaging session status is notified to one or more associated TCPs 102B-N and the WAN devices 116A-N connected to the TS 106. At Step 410, a resume conference messaging session request is received from one of the associated one or more TCPS 102B-N. At Step 412, the ongoing conference messaging session with the WAN devices 116A-N is resumed by the TS 106 based on the resume conference messaging session request received from said one of the TCPs 102B-N and the status of session is changed to running.

In one embodiment, upon receiving the transfer session request, the TS 106 provides an access identifier associated with the ongoing conference messaging session to the TCP 102A. Accordingly, the TS 106 receives the resume ongoing conference messaging session request with the access identifier from a different one of the TCPs 102B-N. Based on the access identifier, the TS 106 resumes the ongoing conference messaging session on the different one of the TCPs 102B-N. In an alternate embodiment, if the access identifier is not generated, then upon forwarding the resume ongoing conference messaging session request, the TS 106 sends a response along with the session information such as information of parked sessions, associated session identifiers and other related information in an XML format to one of the TCPs 102B-N. Then, the one of the TCP 102B-N sends a resume ongoing conference messaging session request along with the associated session identifier to the TS 106. Accordingly, the TS 106 resumes the ongoing conference messaging session on the different one of the TCPs 102B-N.

Accordingly, the ongoing conference messaging session is transferred seamlessly between the TCP 102A and one of the TCPs 102B-N. Although, the above steps describe transferring the session from one TCP to another TCP, one skilled in the art can understand that the ongoing conference messaging session can be transferred from a TCP to a telephony client device (TC). The TC is connected to the TS 106 for media related handling and providing input and output of the TCP during the conference messaging session.

In another aspect of the present invention, the TCP 102A fetches media capabilities of the TC and then sets up the input-output session between the TC and the TS 106. This is performed using the input configuration service of the UPnP telephony based home network system. In these embodiments, the TCP 102Afetches device capabilities of the TC and the TS 106, and then decide on device roles as per user request, and sets up the input and output channel. Accordingly, the TC can send instant messages to the one or more WAN devices during the ongoing conference messaging session. It can be noted that, the instant messages are exchanged between the TC and TS 106 and the TCP 102A acts as a session control point.

In transferring a session, consider the example where John Doe is using an UPnP telephony based home network system having a personal computer, and TV acting as TCP for accessing messaging service and a cell phone acting as TS to interface with WAN devices. Further, consider that John Doe initiates a conference messaging session with his friends using WAN devices. During the conference messaging session, John Doe comes to know from one of his friends about news flashing on a TV channel and wishes to watch the news. In this scenario, John Doe wishes to transfer the ongoing conference messaging session from the PC to the TV so as to chat simultaneously while watching the news on the TV. The TV may act as a TC connected to the TCP (i.e., PC) or a TCP. This is achieved by transferring the session as described in above process flow of transferring a conference messaging session.

In another aspect of the present invention, in transferring a session, consider that John Doe is using an UPnP telephony based home network system having a personal computer, and TV acting as TCP for accessing messaging service and a cell phone acting as TS to interface with WAN devices. Further, consider that John Doe initiates a conference messaging session with his friends using WAN devices. During the conference messaging session, John Doe comes to know from one of his friends about news flashing on a TV channel and wishes to watch the news. In this scenario, John Doe wishes to transfer the ongoing conference messaging session from the PC to the TV so as to chat simultaneously while watching the news on the TV. The TV may act as a TC connected to the TCP (i.e., PC) or a TCP. This is achieved by transferring the session as described in above process flow of transferring a conference messaging session.

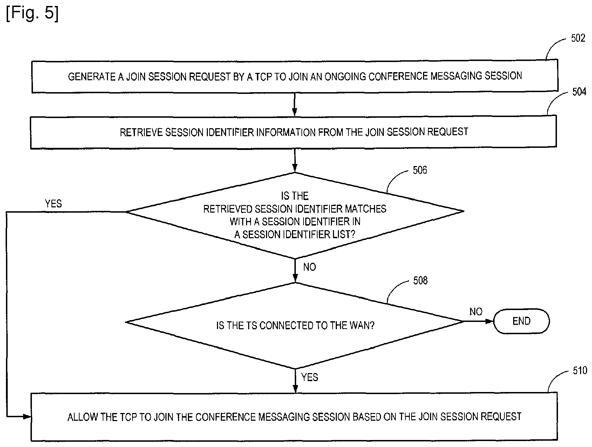

FIG. 5 is a process flow diagram illustrating a method of joiningan ongoing conference messaging session with the WAN devices 116A-N, according to one embodiment. At Step 502, a join session request is generated by the TCP 102A to join an ongoing conference messaging session. For example, the TCP 102A may generate the join session request if the battery of mobile phone is running low or loss of signal to the TS 106. At Step 504, a session identifier is retrieved from the received join session request by the TS 106.

In Step 506, it is determined whether the retrieved session identifier matches with a session identifier in the session identifier list. If the determination is true, then the TCP 102A is allowed to join the ongoing conference messaging session at Step 510. If the determination is false, then at Step 508 it is determined whether the TS 106 is connected to the WAN 114. If the TS 106 is connected to the WAN 114, then the TCP 102A is allowed to join the ongoing conference messaging session, at Step 510, otherwise the process is terminated.

Moreover, in one embodiment, a non-transitory computer-readable storage medium has instructions that, when executed by one of the TCPs 102A-N (e.g., Television, Personal Computer) and/or TS 102 (e.g., mobile phone, PDA, and the like), causes the one of the TCPs 102A-N and the TS 106 perform the methods of FIGs. 2-5.

It will be understood by those skilled in the art that the various embodiments discussed herein may or may not be the same embodiment, and may be grouped into various other embodiments not explicitly disclosed herein. In addition, it will be appreciated by those skilled in the art that the various operations, processes, and methods disclosed herein may be embodied in a machine-readable medium and/or a machine accessible medium compatible with a data processing system (e.g., a computer system), and may be performed in any order (e.g., including using means for achieving the various operations). Accordingly, the specification and drawings are to be regarded in an illustrative rather than a restrictive sense and various changes in form and detail may be made therein without departing from the scope of the invention as defined by the appended claims.

## Claims

1. A method for performing, by a Telephony Server, TS, (102) in a first network (100), conference messaging between at least one Telephony Control Point, TCP, (102) in the first network (100) and a plurality of Wide Area Network, WAN, devices (116) connected to a second network (114), comprising:
receiving (206) a session request associated with a conference messaging session with the plurality of WAN devices (116) from the at least one TCP (102) in the first network (100), wherein the session request includes session information, media capabilities of the at least one TCP (102), a list of the plurality of WAN devices (116) and a subject of the conference messaging session; and
establishing the conference messaging session between the at least one TCP (102) and the plurality of WAN devices (116) based on the session request, wherein the establishing the conference messaging session comprises: generating a conference initiate request associated with the conference messaging session, wherein the conference initiate request includes a unique conference session identifier, the media capabilities of the at least one TCP (102), and the subject of the conference messaging session; and transmitting the conference initiate request to each of the plurality of devices (116) connected to the second network listed in the session request,
receiving a transfer session request by the at least one TCP (102) in the conference messaging session while the conference messaging session is ongoing;
retrieving a session identifier from the transfer session request, wherein the transfer session request is used to identify whether to leave the ongoing conference messaging session without termination;
marking (404) an ongoing conference messaging session status as parked; and
notifying (406) one or more TCPs associated with the ongoing conference messaging session and the plurality of WAN devices (116) of the status of the ongoing conference messaging session,
wherein, while the conference messaging session is ongoing, a dynamic session information associated with the conference messaging session is provided to the at least one TCP (102), wherein the dynamic session information includes user leaving session information, user joining session information, or any changes in the subject of conference session,
wherein the first network is an Universal Plug and Play, UPnP, telephony based home network, and the second network (114) is a Wide Area Network (WAN).

2. The method of claim 1, wherein establishing the conference messaging session between the at least one TCP (102) and the plurality of WAN devices (116) comprises:
initiating the conference messaging session with the plurality of WAN devices (116) based on the session request; and
enabling (220) the conference messaging between the at least one TCP (102) and one or more devices from among the plurality of WAN devices (116) based on the media capabilities of the at least one TCP (102).

3. The method of claim 2, wherein establishing the conference messaging session between the at least one TCP (102) and the plurality of WAN devices (116) based on the session request further comprises:
retrieving the list of the plurality of WAN devices (116), the media capabilities of the at least one TCP (102), the session information from the session request;
determining whether the session request is associated with a conference messaging session based on the session information; and
if the session request is associated with the conference messaging session, forwarding a conference initiate request to each of the plurality of WAN devices (116).

4. The method of claim 1, wherein establishing the conference messaging session between the at least one TCP (102) and the plurality of WAN devices (116) based on the session request comprises:
receiving one or more confirmation messages from the one or more WAN devices in response to the conference initiate request, each of the one or more confirmation messages indicating successful initiation of the conference messaging session; and
forwarding the one or more confirmation messages to the at least one TCP (102) based on its media capabilities.

5. The method of claim 2, wherein enabling the conference messaging between the at least one TCP (102) and one or more device from among the plurality of WAN devices (116) comprises:
enabling exchange of a plurality of instant messages between the at least one TCP (102) and the one or more devices from among the plurality of WAN devices (116) during the conference messaging session based on the media capabilities of the at least one TCP (102).

6. The method of claim 2, wherein enabling the conference messaging between the at least one TCP (102) and one or more devices from among the plurality of WAN devices (116) further comprises:
receiving one or more instant messages from the one or more WAN devices during the conference messaging session;
processing the one or more instant messages such that the one or more instant messages are displayed in compatible format on a display of the at least one TCP (102) based on the media capabilities of the at least one TCP (102); and
forwarding the processed one or more instant messages to the at least one TCP (102).

7. The method of claim 1, further comprising:
receiving a modify session request from the at least one TCP (102) in the conference messaging session while the conference messaging session is ongoing;
retrieving (304) information from the modify session request, wherein the modify session request includes subject information, media capabilities of the at least one TCP (102), and at least one WAN device connected to the second network (114) to be one of added into and removed from the conference messaging session;
communicating (308) the information retrieved from the modify session request to the plurality of WAN devices (116);
adding or removing (308) at least one WAN device connected to the second network (114) from the ongoing conference messaging session based on the modify session request; and
notifying (310) one or more TCPs associated with the ongoing conference messaging session and other active WAN devices connected to the second network (114) of the conference messaging session regarding the addition and removal of the at least one WAN device.

8. The method of claim 1, further comprising:
receiving (408) a resume session request from the at least one TCP (102); and
resuming (412) the ongoing conference messaging session with the plurality of WAN devices (116) based on the resume session request received from the at least one TCP (102), wherein the status of session is changed to running upon resuming the ongoing conference messaging session.

9. The method of claim 1, further comprising:
receiving (502) a join session request from the at least one TCP (102);
retrieving (504) a session identifier from the join session request;
determining (506) whether the retrieved session identifier matches a session identifier of a session identifier list;
if the retrieved session identifier matches the session identifier of the session identifier list, allowing (510) the at least one TCP (102) to join the conference messaging session based on the join session request.

10. The method of claim 1, further comprising:
receiving information associated with the conference messaging session from at least one of the plurality of WAN devices (116) or the at least one TCP (102) in the conference messaging session while the conference messaging session is ongoing; and
updating information associated with the conference messaging session by the at least one TCP or one of the WAN devices while the conference messaging session is ongoing.

11. A Telephony Server, TS, (102) in a first network (100), for performing conference messaging between at least one Telephony Control Point, TCP, (102) in the first network (100) and a plurality of WAN devices (116) connected to a second network (114), the Telephony Server adapted to perform the steps of the method of any one of claims 1 to 10, wherein the first network is an Universal Plug and Play, UPnP, telephony based home network, and the second network (11) is a Wide Area Network (WAN).

## Patentansprüche

1. Verfahren zum Durchführen, durch einen Telephonieserver, TS, (102) in einem ersten Netzwerk (100), von Konferenz-Messaging zwischen zumindest einem Telephoniekontrollpunkt, TCP, (102) in dem ersten Netzwerk (100) und einer Vielzahl von WAN-(Wide Area Network-)Geräten (116), die mit einem zweiten Netzwerk (114) verbunden sind, umfassend:
Empfangen (206) einer Sitzungsanforderung im Zusammenhang mit einer Konferenz-Messaging-Sitzung mit der Vielzahl von WAN-Geräten (116) von dem zumindest einen TCP (102) in dem ersten Netzwerk (100), wobei die Sitzungsanforderung Sitzungsinformationen, Medienfähigkeiten des zumindest einen TCP (102), eine Liste der Vielzahl von WAN-Geräten (116) und einen Betreff der Konferenz-Messaging-Sitzung beinhaltet; und
Herstellen der Konferenz-Messaging-Sitzung zwischen dem zumindest einen TCP (102) und der Vielzahl von WAN-Geräten (116) auf Grundlage der Sitzungsanforderung, wobei das Herstellen der Konferenz-Messaging-Sitzung Folgendes umfasst: Generieren einer Konferenzinitiierungsanforderung im Zusammenhang mit der Konferenz-Messaging-Sitzung, wobei die Konferenzinitiierungsanforderung eine einmalige Konferenzsitzungskennung, die Medienfähigkeiten des zumindest einen TCP (102) und den Betreff der Konferenz-Messaging-Sitzung beinhaltet; und Übertragen der Konferenzinitiierungsanforderung an jedes aus der mit dem zweiten Netzwerk verbundenen Vielzahl von Geräten (116), die in der Sitzungsanforderung aufgelistet sind,
Empfangen einer Sitzungsübertragungsanforderung von dem zumindest einen TCP (102) in der Konferenz-Messaging-Sitzung, während die Konferenz-Messaging-Sitzung andauert;
Abrufen einer Sitzungskennung aus der Sitzungsübertragungsanforderung, wobei die Sitzungsübertragungsanforderung verwendet wird, um zu identifizieren, ob die andauernde Konferenz-Messaging-Sitzung ohne Beendigung verlassen werden soll;
Markieren (404) des Status einer andauernden Konferenz-Messaging-Sitzung als geparkt; und
Benachrichtigen (406) eines oder mehrerer TCPs im Zusammenhang mit der andauernden Konferenz-Messaging-Sitzung und der Vielzahl von WAN-Geräten (116) über den Status der andauernden Konferenz-Messaging-Sitzung,
wobei, während die Konferenz-Messaging-Sitzung andauert, dem zumindest einen TCP (102) dynamische Sitzungsinformationen im Zusammenhang mit der Konferenz-Messaging-Sitzung bereitgestellt werden, wobei die dynamischen Sitzungsinformationen Informationen über Benutzer, die die Sitzung verlassen, Informationen über Benutzer, die sich der Sitzung anschließen, oder beliebige Änderungen des Betreffs der Konferenzsitzung beinhalten,
wobei das erste Netzwerk ein auf UPnP-(Universal Plug and Play-)Telephonie basiertes Heimnetzwerk ist und das zweite Netzwerk (114) ein Wide Area Network (WAN) ist.

2. Verfahren nach Anspruch 1, wobei das Herstellen der Konferenz-Messaging-Sitzung zwischen dem zumindest einen TCP (102) und der Vielzahl von WAN-Geräten (116) Folgendes umfasst:
Initiieren der Konferenz-Messaging-Sitzung mit der Vielzahl von WAN-Geräten (116) auf Grundlage der Sitzungsanforderung; und
Ermöglichen (220) des Konferenz-Messagings zwischen dem zumindest einen TCP (102) und einem oder mehreren Geräten aus der Vielzahl von WAN-Geräten (116) auf Grundlage der Medienfähigkeiten des zumindest einen TCP (102).

3. Verfahren nach Anspruch 2, wobei das Herstellen der Konferenz-Messaging-Sitzung zwischen dem zumindest einen TCP (102) und der Vielzahl von WAN-Geräten (116) auf Grundlage der Sitzungsanforderung ferner Folgendes umfasst:
Abrufen der Liste der Vielzahl von WAN-Geräten (116), der Medienfähigkeiten des zumindest einen TCP (102), der Sitzungsinformationen aus der Sitzungsanforderung;
Bestimmen, ob die Sitzungsanforderung mit einer Konferenz-Messaging-Sitzung im Zusammenhang steht, auf Grundlage der Sitzungsinformationen; und
wenn die Sitzungsanforderung mit der Konferenz-Messaging-Sitzung im Zusammenhang steht, Weiterleiten einer Konferenzinitiierungsanforderung an jedes aus der Vielzahl von WAN-Geräten (116).

4. Verfahren nach Anspruch 1, wobei das Herstellen der Konferenz-Messaging-Sitzung zwischen dem zumindest einen TCP (102) und der Vielzahl von WAN-Geräten (116) auf Grundlage der Sitzungsanforderung Folgendes umfasst:
Empfangen von einer oder mehreren Bestätigungsnachrichten von dem einen oder den mehreren WAN-Geräten als Reaktion auf die Konferenzinitiierungsanforderung, wobei jede von der einen oder den mehreren Bestätigungsnachrichten das erfolgreiche Initiieren der Konferenz-Messaging-Sitzung angibt; und
Weiterleiten der einen oder mehreren Bestätigungsnachrichten an den zumindest einen TCP (102) auf Grundlage seiner Medienfähigkeiten.

5. Verfahren nach Anspruch 2, wobei das Ermöglichen des Konferenz-Messagings zwischen dem zumindest einen TCP (102) und einem oder mehreren Geräten aus der Vielzahl von WAN-Geräten (116) Folgendes umfasst:
Ermöglichen des Austauschs einer Vielzahl von Instant-Nachrichten zwischen dem zumindest einen TCP (102) und dem einen oder den mehreren Geräten aus der Vielzahl von WAN-Geräten (116) während der Konferenz-Messaging-Sitzung auf Grundlage der Medienfähigkeiten des zumindest einen TCP (102).

6. Verfahren nach Anspruch 2, wobei das Ermöglichen des Konferenz-Messagings zwischen dem zumindest einen TCP (102) und einem oder mehreren Geräten aus der Vielzahl von WAN-Geräten (116) ferner Folgendes umfasst:
Empfangen von einer oder mehreren Instant-Nachrichten von dem einen oder den mehreren WAN-Geräten während der Konferenz-Messaging-Sitzung;
Verarbeiten der einen oder mehreren Instant-Nachrichten, sodass die eine oder mehreren Instant-Nachrichten in kompatiblem Format auf einer Anzeige des zumindest einen TCP (102) auf Grundlage der Medienfähigkeiten des zumindest einen TCP (102) angezeigt werden; und
Weiterleiten der verarbeiteten einen oder mehreren Instant-Nachrichten an den zumindest einen TCP (102).

7. Verfahren nach Anspruch 1, ferner umfassend:
Empfangen einer Sitzungsmodifikationsanforderung von dem zumindest einen TCP (102) in der Konferenz-Messaging-Sitzung, während die Konferenz-Messaging-Sitzung andauert;
Abrufen (304) von Informationen aus der Sitzungsmodifikationsanforderung, wobei die Sitzungsmodifikationsanforderung Betreffsinformationen, Medienfähigkeiten des zumindest einen TCP (102) und zumindest ein WAN-Gerät verbunden mit dem zweiten Netzwerk (114) als eines zu der Konferenz-Messaging-Sitzung hinzuzufügendes und davon zu entfernendes beinhaltet;
Kommunizieren (308) der aus der Sitzungsmodifikationsanforderung abgerufenen Informationen an die Vielzahl von WAN-Geräten (116);
Hinzufügen oder Entfernen (308) von zumindest einem WAN-Gerät, das mit dem zweiten Netzwerk (114) verbunden ist, zu/von der andauernden Konferenz-Messaging-Sitzung auf Grundlage der Sitzungsmodifikationsanforderung; und
Benachrichtigen (310) eines oder mehrerer TCPs im Zusammenhang mit der andauernden Konferenz-Messaging-Sitzung und anderen aktiven WAN-Geräten, die mit dem zweiten Netzwerk (114) der Konferenz-Messaging-Sitzung verbunden sind, über das Hinzufügen und Entfernen des zumindest einen WAN-Geräts.

8. Verfahren nach Anspruch 1, ferner umfassend:
Empfangen (408) einer Sitzungswiederaufnahmeanforderung von dem zumindest einen TCP (102); und
Wiederaufnehmen (412) der andauernden Konferenz-Messaging-Sitzung mit der Vielzahl von WAN-Geräten (116) auf Grundlage der von dem zumindest einen TCP (102) empfangenen Sitzungswiederaufnahmeanforderung, wobei der Sitzungsstatus beim Wiederaufnehmen der andauernden Konferenz-Messaging-Sitzung zu laufend geändert wird.

9. Verfahren nach Anspruch 1, ferner umfassend:
Empfangen (502) einer Sitzungsbeitrittsanforderung von dem zumindest einen TCP (102);
Abrufen (504) einer Sitzungskennung aus der Sitzungsbeitrittsanforderung;
Bestimmen (506), ob die abgerufene Sitzungskennung mit einer Sitzungskennung einer Sitzungskennungsliste übereinstimmt;
wenn die abgerufene Sitzungskennung mit der Sitzungskennung der Sitzungskennungsliste übereinstimmt, Genehmigen (510) des zumindest einem TCP (102), der Konferenz-Messaging-Sitzung auf Grundlage der Sitzungsbeitrittsanforderung beizutreten.

10. Verfahren nach Anspruch 1, ferner umfassend:
Empfangen von Informationen im Zusammenhang mit der Konferenz-Messaging-Sitzung von zumindest einem aus der Vielzahl von WAN-Geräten (116) oder dem zumindest einen TCP (102) in der Konferenz-Messaging-Sitzung, während die Konferenz-Messaging-Sitzung andauert; und
Aktualisieren von Informationen im Zusammenhang mit der Konferenz-Messaging-Sitzung durch den zumindest einen TCP oder eines der WAN-Geräte, während die Konferenz-Messaging-Sitzung andauert.

11. Telephonieserver, TS, (102) in einem ersten Netzwerk (100) zum Durchführen von Konferenz-Messaging zwischen zumindest einem Telephoniekontrollpunkt, TCP, (102) in dem ersten Netzwerk (100) und einer Vielzahl von WAN-Geräten (116), die mit einem zweiten Netzwerk (114) verbunden sind, wobei der Telephonieserver angepasst ist, um die Schritte des Verfahrens nach einem der Ansprüche 1 bis 10 durchzuführen, wobei das erste Netzwerk ein auf UPnP-(Universal Plug and Play-)Telephonie basiertes Heimnetzwerk ist und das zweite Netzwerk (11) ein Wide Area Network (WAN) ist.

## Revendications

1. Procédé permettant de réaliser, au moyen d'un serveur de téléphonie, TS, (102) dans un premier réseau (100), une messagerie de conférence entre au moins un point de commande de téléphonie, TCP, (102) dans le premier réseau (100) et une pluralité de dispositifs de réseau étendu, WAN (116) connectés à un second réseau (114), comprenant :
la réception (206) d'une demande de session associée à une session de messagerie de conférence avec la pluralité de dispositifs WAN (116) provenant dudit au moins un TCP (102) dans le premier réseau (100), ladite demande de session comportant les informations de session, les capacités multimédias dudit au moins un TCP (102), une liste de la pluralité de dispositifs WAN (116) et un sujet de la session de messagerie de conférence ; et
l'établissement de la session de messagerie de conférence entre ledit au moins un TCP (102) et la pluralité de dispositifs WAN (116) sur la base de la demande de session, ledit établissement de la session de messagerie de conférence comprenant : la génération d'une demande d'initiation de conférence associée à la session de messagerie de conférence, ladite demande d'initiation de conférence comportant un identifiant de session de conférence unique, les capacités multimédias dudit au moins un TCP (102), et le sujet de la session de messagerie de conférence ; et la transmission de la demande d'initiation de conférence à chacun de la pluralité de dispositifs (116) connectés au second réseau énumérés dans la demande de session,
la réception d'une demande de session de transfert par ledit au moins un TCP (102) dans la session de messagerie de conférence alors que la session de messagerie de conférence est en cours ;
la récupération d'un identifiant de session à partir de la demande de session de transfert, ladite demande de session de transfert étant utilisée pour déterminer s'il faut quitter la session de messagerie de conférence en cours sans fermeture ;
l'indication (404) d'un statut de session de messagerie de conférence en cours comme étant mis en attente ; et
la notification (406) à un ou plusieurs TCP associés à la session de messagerie de conférence en cours et à la pluralité de dispositifs WAN (116) du statut de la session de messagerie de conférence en cours,
alors que la session de messagerie de conférence est en cours, une information de session dynamique associée à la session de messagerie de conférence étant fournie audit au moins un TCP (102), ladite information de session dynamique comportant des informations sur les utilisateurs quittant la session, des informations sur les utilisateurs rejoignant la session, ou tout changement du sujet de la session de conférence,
ledit premier réseau étant une téléphonie Universal Plug and Play, UPnP, basée sur réseau domestique, et le second réseau (114) étant un réseau étendu (WAN).

2. Procédé selon la revendication 1, ledit établissement de la session de messagerie de conférence entre ledit au moins un TCP (102) et la pluralité de dispositifs WAN (116) comprenant :
l'initiation de la session de messagerie de conférence avec la pluralité de dispositifs WAN (116) sur la base de la demande de session ; et
l'activation (220) de la messagerie de conférence entre ledit au moins un TCP (102) et un ou plusieurs dispositifs parmi la pluralité de dispositifs WAN (116) sur la base des capacités multimédias dudit au moins un TCP (102).

3. Procédé selon la revendication 2, ledit établissement de la session de messagerie de conférence entre ledit au moins un TCP (102) et la pluralité de dispositifs WAN (116) basé sur la demande de session comprenant en outre :
la récupération de la liste de la pluralité de dispositifs WAN (116), des capacités multimédias dudit au moins un TCP (102), des informations de session à partir de la demande de session ;
la détermination pour savoir si la demande de session est associée à une session de messagerie de conférence sur la base des informations de session ; et
si la demande de session est associée à la session de messagerie de conférence, la transmission de la demande d'initiation de conférence à chacun de la pluralité de dispositifs WAN (116).

4. Procédé selon la revendication 1, ledit établissement de la session de messagerie de conférence entre ledit au moins un TCP (102) et la pluralité de dispositifs WAN (116) basé sur la demande de session comprenant :
la réception d'un ou plusieurs messages de confirmation provenant desdits un ou plusieurs dispositifs WAN en réponse à la demande d'initiation de conférence, chacun desdits un ou plusieurs messages de confirmation indiquant l'initiation réussie de la session de messagerie de conférence ; et
la transmission desdits un ou plusieurs messages de confirmation audit au moins un TCP (102) sur la base de ses capacités multimédias.

5. Procédé selon la revendication 2, ladite activation de la messagerie de conférence entre ledit au moins un TCP (102) et un ou plusieurs dispositifs parmi la pluralité de dispositifs WAN (116) comprenant :
l'activation de l'échange d'une pluralité de messages instantanés entre ledit au moins un TCP (102) et lesdits un ou plusieurs dispositifs parmi la pluralité de dispositifs WAN (116) pendant la session de messagerie de conférence sur la base des capacités multimédias dudit au moins un TCP (102).

6. Procédé selon la revendication 2, ladite activation de la messagerie de conférence entre ledit au moins un TCP (102) et un ou plusieurs dispositifs parmi la pluralité de dispositifs WAN (116) comprenant en outre :
la réception d'un ou plusieurs messages instantanés provenant desdits un ou plusieurs dispositifs WAN pendant la session de messagerie de conférence ;
le traitement desdits un ou plusieurs messages instantanés de sorte que lesdits un ou plusieurs messages instantanés soient affichés sous un format compatible sur un écran dudit au moins un TCP (102) sur la base des capacités multimédias dudit au moins un TCP (102) ; et
la transmission desdits un ou plusieurs messages instantanés traités audit au moins un TCP (102).

7. Procédé selon la revendication 1, comprenant en outre :
la réception d'une demande de modification de session provenant dudit au moins un TCP (102) dans la session de messagerie de conférence alors que la session de messagerie de conférence est en cours ;
la récupération (304) d'informations à partir de la demande de modification de session, ladite demande de modification de session comportant des informations sur le sujet, les capacités multimédias dudit au moins un TCP (102), et au moins un dispositif WAN connecté au second réseau (114) devant être un ajouté à et enlevé de la session de messagerie de conférence ;
la communication (308) des informations récupérées à partir de la demande de modification de session à la pluralité de dispositifs WAN (116) ;
l'ajout ou le retrait (308) dudit au moins un dispositif WAN connecté au second réseau (114) de la session de messagerie de conférence en cours sur la base de la demande de modification de session ; et
la notification (310) à un ou plusieurs TCP associés à la session de messagerie de conférence en cours et aux autres dispositifs WAN actifs connectés au second réseau (114) de la session de messagerie de conférence concernant l'addition et le retrait dudit au moins un dispositif WAN.

8. Procédé selon la revendication 1, comprenant en outre :
la réception (408) d'une demande de reprise de session provenant dudit au moins un TCP (102) ; et
la reprise (412) de la session de messagerie de conférence en cours avec la pluralité de dispositifs WAN (116) sur la base de la demande de reprise de session reçue en provenance dudit au moins un TCP (102), ledit statut de session passant à en cours d'exécution lors de la reprise de la session de messagerie de conférence en cours.

9. Procédé selon la revendication 1, comprenant en outre :
la réception (502) d'une demande pour rejoindre la session provenant dudit au moins un TCP (102) ;
la récupération (504) d'un identifiant de session à partir de la demande pour rejoindre la session ;
la détermination (506) pour savoir si l'identifiant de session récupéré correspond à un identifiant de session d'une liste d'identifiants de session ;
si l'identifiant de session récupéré correspond à l'identifiant de session de la liste d'identifiants de session, l'autorisation (510) audit au moins un TCP (102) de rejoindre la session de messagerie de conférence sur la base de la demande pour rejoindre la session.

10. Procédé selon la revendication 1, comprenant en outre :
la réception d'informations associées à la session de messagerie de conférence en provenance d'au moins l'un de la pluralité de dispositif WAN (116) ou dudit au moins un TCP (102) dans la session de messagerie de conférence alors que la session de messagerie de conférence est en cours ; et
la mise à jour des informations associées à la session de messagerie de conférence par ledit au moins TCP ou l'un des dispositifs WAN alors que la session de messagerie de conférence est en cours.

11. Serveur de téléphonie, TS, (102) dans un premier réseau (100), permettant de réaliser une messagerie de conférence entre ledit au moins un point de commande de téléphonie, TCP, (102) dans le premier réseau (100) et une pluralité de dispositifs WAN (116) connectés à un second réseau (114), le serveur de téléphonie étant adapté pour effectuer les étapes du procédé selon l'une quelconque des revendications 1 à 10, ledit premier réseau étant une téléphonie Universal Plug and Play, UPnP, basée sur réseau domestique, et ledit second réseau (11) étant un réseau étendu (WAN).
